# EUROPEAN PATENT APPLICATION

(11) **EP 4 626 053 A1**
(43) Date of publication of application: **01.10.2025**
(21) Application number: 25155914.2
(22) Date of filing: 05.02.2025
(51) Int. Cl.: H04W 12/06, H04L 9/40, G06F 21/41, G06F 21/35, G06F 21/33, H04W 4/80

(54) **DISPLAY DEVICE, DISPLAY SYSTEM AND METHOD FOR UNLOCKING DISPLAY DEVICE IN LOCKED STATE**

(30) Priority: 28.03.2024 TW 113111744
(71) Applicant: Optoma Coporation, New Taipei City (TW)
(72) Inventor: WANG, Kuo-Ming, 231633 NEW TAIPEI CITY (TW)
(74) Representative: Ter Meer Steinmeister & Partner

(57) **Abstract**

The disclosure is related to a display device, a display system and a method of unlocking the display device. The method includes the steps of executing an application program by an electronic device; displaying a pattern by a first display panel of the electronic device, wherein the pattern represents a signal of a card number; establishing a near field communication connection between the display device and the electronic device according to the signal of the card number; executing an unlock program and receiving a user information; changing from a locked state to an unlocked state of the display device; and displaying the user data by the display device.

## Description

This application claims Taiwan Patent Appl. Serial Number 113111744, filed on March 28, 2024.

### TECHNICAL FIELD

The disclosure is related to an electronic device, an electronic system and a method of unlocking the electronic device. More particularly, the embodiments are related to a display device, a display system and a method for unlocking the display device in locked state.

### DESCRIPTION OF RELATED ART

In order to improve the teaching effect, in addition to teaching the content in the textbook, teachers also provide teaching content through different media or digital resources to increase the richness of the teaching content. Therefore, teaching devices such as interactive whiteboards or interactive touch devices have emerged accordingly.

However, existing teaching devices are not equipped with an identity authentication system. Therefore, anyone who is not authorized can operate the teaching device in a classroom. The users of the teaching device cannot be effectively managed. This may result in teaching devices being used outside of teaching hours. In addition, the teaching device may be damaged due to unexpected user's operations. This may lead to difficulties in the management and maintenance of teaching devices. In addition, the above problems are also encountered in conference rooms of a company or other show spaces.

Therefore, the effectively managing of users of electronic whiteboards and/or interactive touch devices is one of the issues to be considered in this technical field.

The information disclosed in this DESCRIPTION OF RELATED ART section is only for enhancement of understanding of the background of the described technology and therefore may contain information that does not form the prior art that is already known to a person of ordinary skill in the art. Further, the information disclosed in the DESCRIPTION OF RELATED ART section does not mean that one or more problems to be resolved by one or more embodiments of the disclosure was acknowledged by a person of ordinary skill in the art.

### SUMMARY OF THE INVENTION

The object is solved by the features of the independent claims Preferred embodiments are given in the dependent claims.

The embodiments of the disclosure provide a display device, a display system, and a method for unlocking the display device. The embodiments may generate a card number signal for confirming a user's identity and unlock the display device after the card number signal passing the verification of identity verification and the verification of a verification information. Therefore, the disclosure may effectively manage the identities of users who use the display device, and only legitimate users may be allowed to operate the display device. The convenience of display device management and maintenance is thereby improved.

In order to achieve the above object and other related objects, the disclosure provides a method for unlocking a display device, which is applied to a display system. The method includes: executing, by the electronic device, an application program; displaying, by a first display panel of the electronic device, a pattern, wherein the pattern represents a card number signal; establishing a near field communication connection between the display device and the electronic device according to the card number signal; executing, by the display device, an unlock program to receive a user data; converting a locked state of the display device to an unlocked state; displaying the user data by a second display panel of the display device.

In one or more embodiments, the card number signal may have a usage time.

In one or more embodiments, the card number signal may be generated by the electronic device based on a verification information, the verification information may have a usage time.

In one or more embodiments, the display system may comprise a cloud server.

In one or more embodiments, the cloud server may be communicatively connected with the electronic device and the display device.

In one or more embodiments, the cloud server may generate the verification information based on a user information.

In one or more embodiments, the cloud server may generate the verification information and an information corresponding to the verification information through an encryption program based on the user information.

In one or more embodiments, the verification information may be a public key and the information corresponding to the verification information may be a private key.

In one or more embodiments, the method may further include: executing, by the cloud server, an identity verification program to start an identity verification process based on the user information.

In one or more embodiments, the verification information may be verified by the cloud server to confirm whether the private key decrypts the public key to generate a verification result message.

In one or more embodiments, when the verification result message is successful, the display device may receive the user data provided by the cloud server.

In order to achieve the above object and other related objects, the disclosure provides a display device, which includes a memory module, a near field communication module, a display panel and a processing module. The memory module stores an unlock program. The near field communication module establishes a near field communication connection and receives a card number signal. The processing module is electrically connected to the memory module, the near field communication module and the display panel. The processing module executes the unlock program to receive a user data, and the processing module allows a locked state of the display device to be changed to an unlocked state. The display panel displays the user data.

In order to achieve the above object and other related objects, the disclosure provides a display system, which includes an electronic device and a display device. The electronic device comprises a first display panel. The display device comprises a second display panel. The electronic device executes an application program, the first display panel displays a pattern, and the pattern represents a card number signal. The display device establishes a near field communication connection with the electronic device according to the card number signal. The display device executes an unlock program to receive a user data, the display device changes from a locked state to an unlocked state, and the second display panel of the display device displays the user data.

In one or more embodiments, the card number signal may have a usage time.

In one or more embodiments, the card number signal may be generated by the electronic device based on a verification information, the verification information has a usage time.

In one or more embodiments, the display system may comprise a cloud server

The cloud server may be communicatively connected with the electronic device and the display device

The cloud server may generate the verification information based on a user information.

In one or more embodiments, the cloud server may generate the verification information and an information corresponding to the verification information through an encryption program based on the user information.

In one or more embodiments, the verification information may be a public key and the information corresponding to the verification information may be a private key.

In one or more embodiments, the cloud server may execute an identity verification program to start an identity verification process based on the user information.

In one or more embodiments, the cloud server may verify the verification information to confirm whether the private key decrypts the public key to generate a verification result message.

In one or more embodiments, when the verification result message indicates success, the display device may receive the user data provided by the cloud server.

According to above, the embodiments of the display device, the display system and the method for unlocking the display device may effectively manage the users who use the display device and only allow legitimate users to operate the display device. Therefore, the convenience of display device management and maintenance is improved.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF DRAWINGS

FIG. 1 is a schematic of a display system according to an embodiment of the disclosure.
FIG. 2 is a schematic of a display device according to an embodiment of the disclosure.
FIG. 3 is a schematic of a flow chart of a method for unlocking a display device according to an embodiment of the disclosure.
FIG. 4 is another schematic of a flow chart of a method for unlocking a display device according to an embodiment of the disclosure.
FIG. 5 is another schematic of a flow chart of a method for unlocking a display device according to an embodiment of the disclosure.
FIG. 6 is another schematic of a flow chart of a method for unlocking a display device according to an embodiment of the disclosure.
FIG. 7 is a schematic of an overall flow chart of a method for unlocking a display device according to an embodiment of the disclosure.

### DESCRIPTION OF THE INVENTION

It is to be understood that other embodiment may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

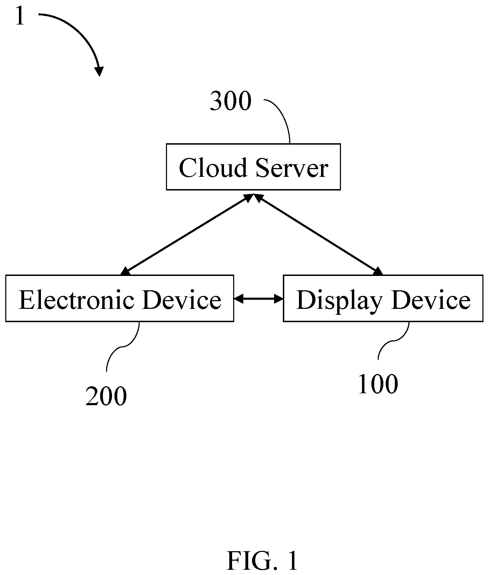

Please refer to FIG. 1. FIG. 1 is a schematic of a display system according to an embodiment of the disclosure. The display system 1 includes a display device 100, an electronic device 200 and a cloud server 300. The display device 100 establishes a near field communication connection with the electronic device 200. The display device 100 and the electronic device 200 are individually communicatively connected to the cloud server 300.

In one embodiment, the display device 100 establishes a near field communication connection with the electronic device 200. The near field communication connection is, for example, near-field communication (NFC).

In one embodiment, the display device 100 is communicatively connected with the cloud server 300, and the electronic device 200 is communicatively connected with the cloud server 300. The communicative connection may be realized by a wired network, a wireless network or a mobile communication network, and the disclosure is not limited thereto.

In the embodiment of FIG. 1, the electronic device 200 has a display panel, and the display panel displays a pattern. The pattern represents a card number signal.

In the embodiment, the electronic device 200 executes an application program or a web program corresponding to the method for unlocking the locked state of the display device to obtain the card number signal. The application program or web program is stored in the storage device of the electronic device 200. The storage device is, for example, any type of a hard disk drive (HDD), a non-volatile memory storage device (such as SSD or flash memory), a dynamic random access memory (DRAM), a static random access memory (SRAM), etc. After the electronic device 200 executes the above application program, the display panel of the electronic device 200 displays a user interface. The user interface receives a user information inputted by the user. The user information includes the user's account number and password. The electronic device 200 transmits the received user information and a verification information request to the cloud server 300 via the network through the above application program.

After the cloud server 300 receives the user information and the verification information request provided by the electronic device 200, the cloud server 300 executes a verification program. When the verification of the user information is successful, the cloud server 300 provides the user information and the verification information to the electronic device 200 according to the verification information request of the electronic device 200. The cloud server 300 has a storage device. The storage device stores the verification program and an identity verification program. The storage device may be the same as the storage device of the electronic device 200.

The electronic device 200 receives the verification information provided by the cloud server 300. The application program executed by the electronic device 200 generates the card number signal based on the received user information and verification information. The verification information has a usage time, and the card number signal also has a usage time corresponding to the verification information. The usage time of the verification information and the usage time of the card number signal may be the same. The usage time indicates the effective usage time of the verification information and the card number signal. In one embodiment, the usage time is 03:15 pm. When the current time exceeds 03:15 pm, the verification information and the card number signal are invalid. In one embodiment, starting from the time when the cloud server 300 provides the verification information, if the electronic device 200 does not establish a communicative connection with the display device 100 within a specified time period (for example, 20 minutes), then the verification information and the card number become invalid. For example, if the time point when the cloud server 300 provides the verification information is 03:10 pm and the time period is 20 minutes, then the usage time of this verification information is 03:30 pm. Therefore, at 03:31 pm, the verification information and card number signal will become invalid. When the verification information is invalid, the electronic device 200 requests the verification information from the cloud server 300 again.

When the verification of the user information fails, the electronic device 200 receives a verification failure message provided by the cloud server 300, and the display panel of the electronic device 200 displays a verification failure notification message on the user interface.

In one embodiment, the card number signal is, for example, a communication signal representing a serial number of a card transmitted via NFC technology.

In one embodiment, the electronic device 200 is, for example, a handheld electronic device such as a smart watch, a tablet computer, or a smart phone.

In this embodiment, the user may operate the electronic device 200 and input the user information through the above user interface to perform the identity verification. The electronic device 200 receives the user information and verification information provided by the cloud server 300, and the electronic device 200 obtains the card number signal to unlock the display device 100 based on the user information and verification information. The card number signal includes the user information and verification information. The card number signal in the disclosure changes with the verification information, so the card number signal cannot easily be copied or misappropriated by others. In addition, since the card number signal has a corresponding usage time, a card number signal that exceeds the usage time cannot be used to unlock the display device 200, which greatly increases the difficulty of copying the card number and effectively reduces the risk of user identity theft.

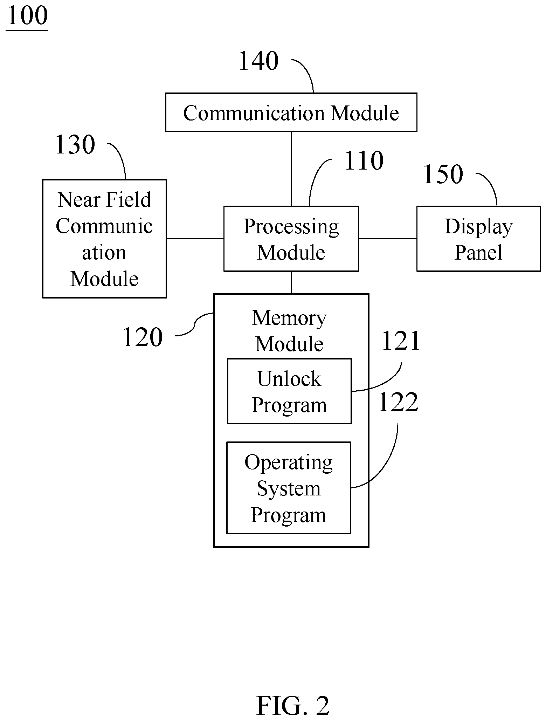

In the embodiment of FIG. 1, the display device 100 has a near field communication module 130 (as shown in FIG. 2). The near field communication module 130 receives the card number signal provided by the electronic device 200 through a near field communication. The display device 100 provides the user information and verification information to the cloud server 300 based on the received card number signal. The cloud server 300 executes the identity verification program to start an identity verification process. When the identity verification is successful, the display device 100 is converted from the locked state to an unlocked state. In the locked state, the display device 100 displays a lock screen (for example, a black screen or a standby screen), and the user cannot operate the display device 100. In the unlocked state, the display device 100 displays a wallpaper screen, and the user can operate the display device 100.

Please refer to FIG. 2. FIG. 2 is a schematic of a display device according to an embodiment of the disclosure. The display device 100 includes a processing module 110, a memory module 120, the near field communication module 130, a communication module 140 and a display panel 150.

In the embodiment of FIG. 2, the processing module 110 is electrically connected to the memory module 120, the near field communication module 130, the communication module 140 and the display panel 150. The processing module 110 reads the unlock program 121 and/or the operating system program 122 stored in the memory module 120 to perform the unlocking of the unlocked state of the display device 100 and the unlocking of the operating system of the display device 100.

In one embodiment, the processing module 110 is, for example, at least one processor. The processor is, for example, a central processing unit (CPU), a microprocessor or a microcontroller or a combination of above devices, and the disclosure is not limited thereto.

In one embodiment, the memory module 120 is, for example, a random-access memory (RAM), a read-only memory (ROM), a flash memory, a hard disk drive (HDD) and/or a solid-state drive (SSD). The memory module 120 is also similar to the storage device of the electronic device 200 and the storage device of the cloud server 300, and the disclosure is not limited thereto.

In the embodiment of FIG. 2, the near field communication module 130 is used to establish a communication connection with the electronic device 200 through a near field communication technology to receive data. In one embodiment, the near field communication module 130 is, for example, an NFC communication circuit or an NFC communication chip, and the disclosure is not limited thereto.

In the embodiment of FIG. 2, the communication module 140 establishes a communication connection with the cloud server 300 to exchange data with the cloud server 300. In one embodiment, the communication module 140 is, for example, a communication circuit or chip (Wi-Fi, 4G or 5G communicated chips) that complies with the Ethernet standard or the Wireless LAN standard.

In the embodiment of FIG. 2, the display panel 150 displays a corresponding display image in response to the operating system and the operations of the user. For example, the display panel 150 displays a desktop image corresponding to the operating system. The display panel 150 may display the user data. In one embodiment, the display panel 150 may include a touch function. The display panel 150 is, for example, a liquid crystal display (LC display) panel, a light emitting diode display (LED display) panel or an organic light-emitting diode display (OLED display) panel. The display panel of the electronic device 200 is also the same hardware, and the disclosure is not limited thereto.

Please refer to FIG. 1 and FIG. 2. In this embodiment, when the display device 100 is in the locked state, the display device 100 is in a standby mode. The near field communication module 130 of the display device 100 maintains a listening mode and waits for the establishment of a near field communication connection with the electronic device 200. When the display device 100 establishes the near field communication connection with the electronic device 200, the display device 100 receives the card number signal from the electronic device 200. The display device 100 transmits the verification information and user information in the received card number signal to the cloud server 300 to perform the identity verification process of the cloud server 300. The cloud server 300 determines whether the identity verification is successful, and the display device 100 receives the verification result message provided by the cloud server 300. When the identity verification is successful, the display device 100 automatically requests a user data corresponding to the user information from the cloud server 300. Based on the received user data, the display device 100 performs the setting of the display parameters and loads the user's file corresponding to the user data. After the setting of the display parameters and loading of the user's file corresponding to the user data is completed, the display device 100 is converted from the locked state to the unlocked state, and the display panel 150 of the display device 100 displays the user data. When the identity verification fails, the display device 100 displays a verification failure message based on the verification result message and remains in the locked state.

In one embodiment, the user data is, for example, a user data (a profile picture, a username, etc.), third-party account information (a login information for a cloud storage), a default display parameter setting data for the display device of the user (such as brightness setting data, wallpaper setting data, etc.) and/or file data (document files, video files, etc.), and the disclosure is not limited thereto.

In one embodiment, the display device 100 is, for example, an interactive flat panel (IFP), an electronic whiteboard, or a large liquid crystal display (LCD), and the disclosure is not limited thereto.

In this embodiment, when the user holds the electronic device 200 close to the display device 100 and establishes a near field communication connection with the display device 100, the display device 100 automatically provides the verification information and user information to the cloud server 300 based on the received card number signal. The cloud server 300 executes the identity verification program to start the identity verification process to perform the identity verification process based on the verification information and user information. The display device 100 determines whether to convert from the locked state to the unlocked state based on the verification result of the identity verification process.

Please refer to FIG. 1. In the embodiment of FIG. 1, the cloud server 300 generates the verification information, and the cloud server 300 verifies the user information from the electronic device 200.

In this embodiment, the cloud server 300 receives the user information from the electronic device 200, and the cloud server 300 executes a verification program to verify the user information. For example, the cloud server 300 compares the user information from the electronic device 200 with the user information stored in the cloud server 300 to confirm whether the account number and password provided by the user are correct. When the verification of user information is successful, the cloud server 300 generates the verification information corresponding to the user information based on the verification information request of the electronic device 200 and generates a usage time corresponding to the verification information. The usage time is the effective usage time of the verification information. When the usage time is exceeded, the verification information becomes invalid. For example, if the cloud server 300 generates the verification information at 01:10 pm and the usage time is 01:30 pm, then the verification information becomes invalid at 01:31 pm. When the verification of the user information fails, the cloud server 300 generates the verification failure message and transmits the verification failure message to the electronic device 200.

In one embodiment, the cloud server 300 generates the verification information and an information corresponding to the verification information through an encryption program based on the user information. For example, the verification information is a public key and the information corresponding to the verification information is a private key. The verification information is provided to the electronic device 200 by the cloud server 300, and the information corresponding to the verification information is stored in the storage device of the cloud server 300. The above-mentioned encryption program may be an encryption algorithm such as a digital signature algorithm (DSA) or a Rivest-Shamir-Adleman (RSA) encryption algorithm.

Please refer to FIG. 1. In the embodiment of FIG. 1, the cloud server 300 generates the verification result message, and the cloud server 300 verifies the verification information from the display device 100.

In this embodiment, the cloud server 300 receives the verification information and user information from the display device 100 and evaluates the validity of the received verification information. After the cloud server 300 receives the verification information, it determines whether the verification failed based on whether the time point of receiving the verification information is later than the usage time of the verification information. When the verification information is successfully verified, the cloud server 300 generates and transmits a successful verification result message to the display device 100, which means that the verification information transmitted by the display device 100 is a valid verification information. In contrast, if the cloud server 300 generates and transmits a failed verification result message to the display device 100, then the verification information transmitted by the display device 100 is an invalid verification information.

In one embodiment, the display device 100 and the electronic device 200 are both communicatively connected to the same cloud server 300. The display device 100 and the electronic device 200 are located in the same area.

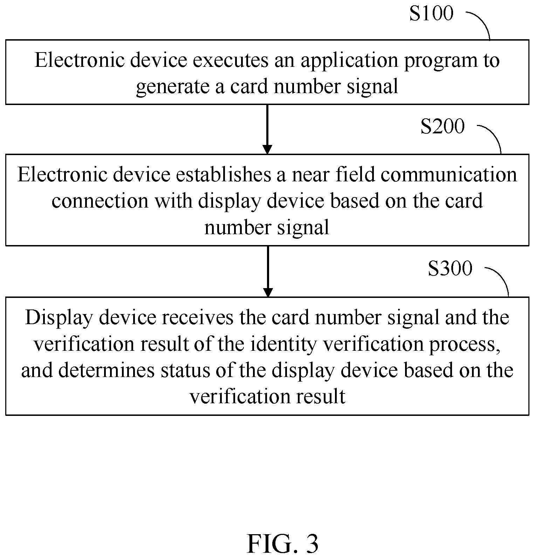

Based on the above, the disclosure further summarizes a method for unlocking a display device, as shown in FIG. 3 to FIG. 7. The method for unlocking the display device may be applied to the display system 1 shown in FIG. 1.

Please refer to FIG. 1 to FIG. 3. The method for unlocking the display device includes the following steps. The numbering of the steps does not limit the order of the steps. The order may be adjusted according to the convenience of implementation.

In step S100, the electronic device 200 executes an application program to generate a card number signal.

In step S200, the electronic device 200 establishes a near field communication connection with the display device 100 based on the card number signal.

In step S300, the display device 100 receives the card number signal and the verification result of the identity verification process and then determines the status of the display device 100 based on the verification result.

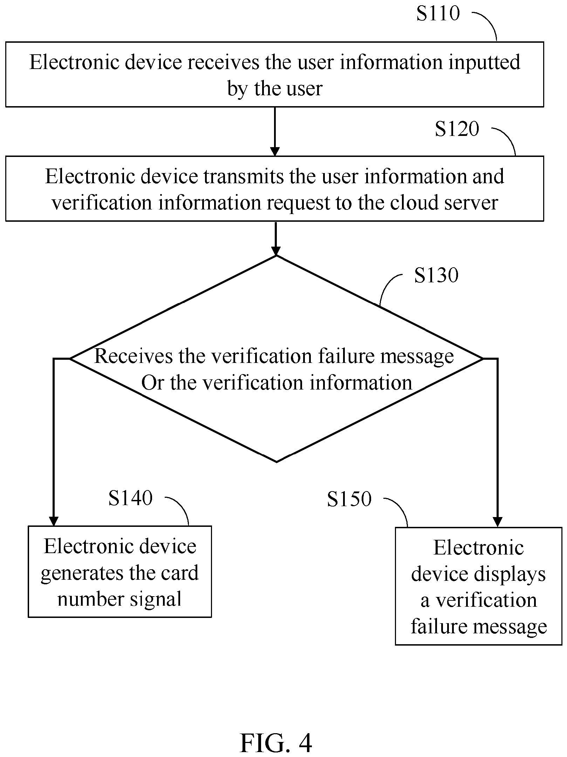

Step S100 further includes the following steps, as shown in FIG. 4.

In step S110, the electronic device 200 receives the user information inputted by the user. In step S120, the electronic device 200 transmits the user information and verification information request to the cloud server 300. In step S130, the electronic device 200 receives the verification failure message or the verification information. In step S140, when the electronic device 200 receives the verification information, the electronic device 200 generates the card number signal. In step S150, when the electronic device 200 receives the verification failure message, the electronic device 200 displays a verification failure message to inform the user of the failed verification.

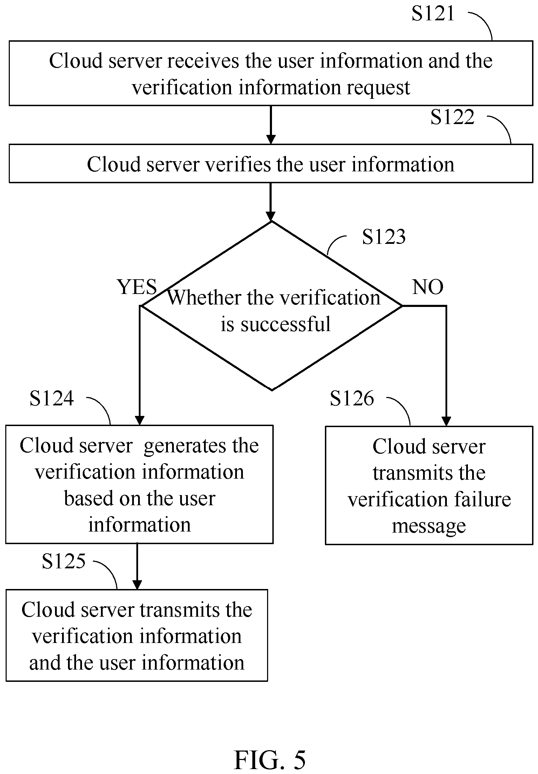

Step S 120 further includes the following steps, as shown in FIG. 5.

In step S121, the cloud server 300 receives the user information and the verification information request. In step S122, the cloud server 300 verifies the user information. In step S123, the cloud server 300 determines whether the verification of the user information is successful. If the verification is successful, the process continues to step S124; otherwise, the process continues to step S 126. In step S124, the cloud server 300 generates the verification information based on the user information. In step S125, the cloud server 300 transmits the verification information and the user information to the electronic device 200. In step S126, the cloud server 300 transmits the verification failure message to the electronic device 200.

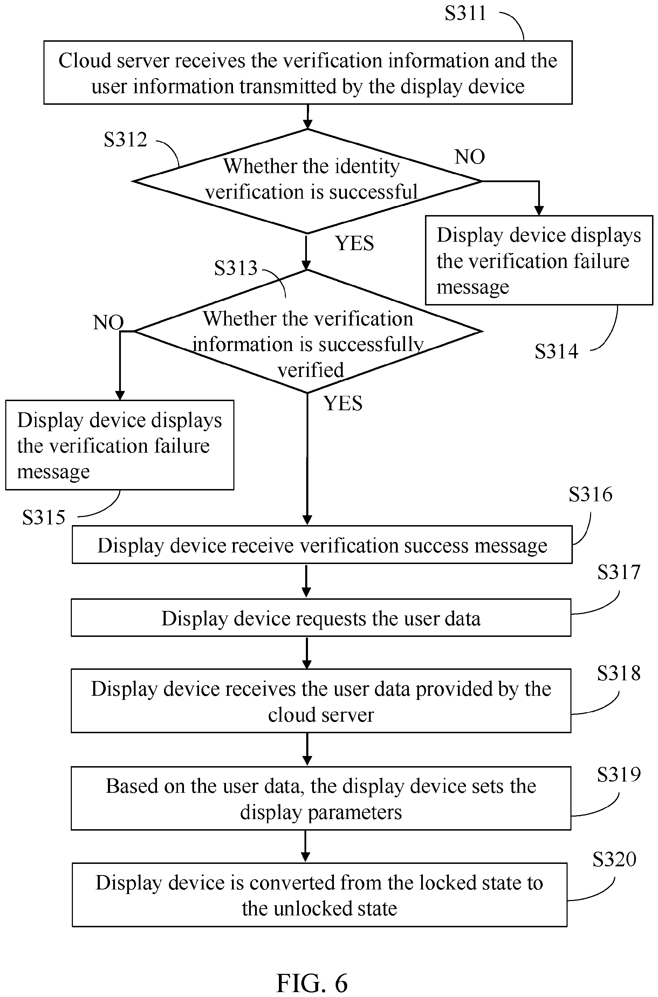

Step S300 further includes the following steps, as shown in FIG. 6.

In step S311, the cloud server 300 receives the card number signal transmitted by the display device 100. The card number signal includes the verification information and the user information.

In step S312, the cloud server 300 executes the identity verification program and starts the identity verification process. The cloud server 300 determines whether the identity verification is successful. That is, the cloud server 300 performs the identity verification process on the user information. If the identity is verified, the process continues to step S313; otherwise, the process continues to step S314. In step S314, the display device 100 displays the verification failure message and the display device 100 remains in the locked state. In step S313, the cloud server 300 determines whether the verification information is successfully verified. The verification information received by the cloud server 300 is compared with the verification information stored in the storage device of the cloud server 300 in order to confirm whether the private key may decrypt the public key. Afterward, the cloud server 300 provides the verification result message to the display device 100. If the verification is successful, the process continues to step S316; otherwise, the process continues to step S315. In step S315, the display device 100 displays the verification failure message (the verification result message), and the display device 100 remains in the locked state. In step S316, the cloud server 300 transmits a verification success message (the verification result message) to the display device 100. In step S317, the processing module 110 of the display device 100 executes the unlock program 121, and after receiving the verification success message, the display device 100 requests the user data from the cloud server 300. In step S318, the unlock program 121 executed by the processing module 110 of the display device 100 receives the user data provided by the cloud server 300. In step S319, based on the user data, the display device 100 automatically sets the display parameters. In step S320, the processing module 110 executes the unlock program 121, and the display device 100 is converted from the locked state to the unlocked state so that the user can operate the display device 100.

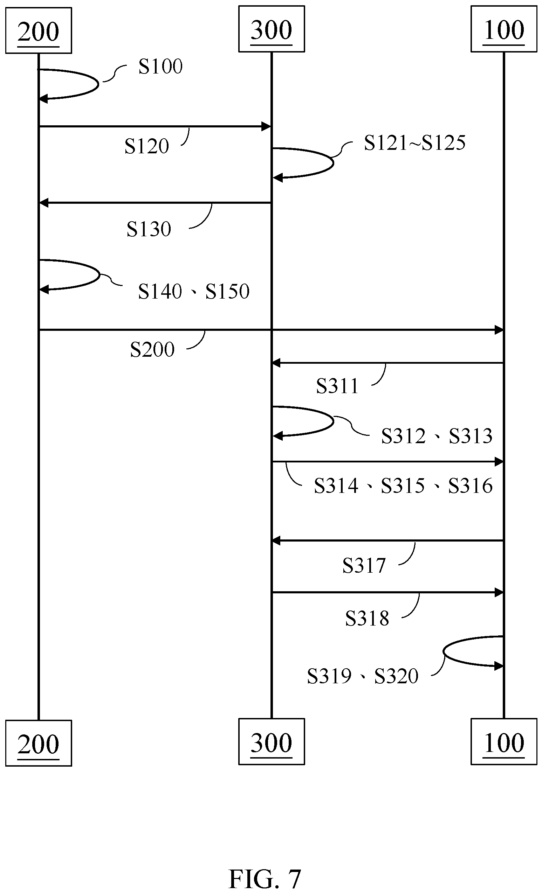

Please refer to FIG. 7. FIG. 7 is a schematic of an overall flow chart of a method for unlocking a display device according to an embodiment of the disclosure.

According to the above, the embodiments of the disclosure have at least one of the following beneficial effects: The electronic device of the disclosure generates a card number signal to simulate an NFC identification card number. Therefore, the disclosure does not require the use of a physical card (an NFC card) to unlock the locked state of the display device. At the same time, since the disclosure does not require the use of physical cards, it effectively avoids the risk of malicious copying of a physical card information. Furthermore, the card number signal in the disclosure is generated instantly; that is, the card number signal changes with the verification information, so the card number signal cannot easily be copied or misappropriated by others. In addition, the card number signal has a corresponding usage time. A card number signal that exceeds the usage time cannot be used to unlock the display device, and the expiration of the usage time is effective in preventing user identity theft. In this way, the disclosure can effectively and accurately manage users who use the display device and only allow legitimate users to operate the display device. Therefore, the purpose of improving the convenience of management and maintenance of the display device is achieved.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims.

## Claims

1. A method for unlocking a display device (100), applied to a display system (1) comprising an electronic device (200) and the display device (100), comprising:
executing (S100), by the electronic device (200), an application program;
displaying , by a first display panel of the electronic device (200), a pattern, wherein the pattern represents a card number signal;
establishing (S200) a near field communication connection between the display device (100) and the electronic device (200) according to the card number signal;
executing, by the display device (100), an unlock program (121) to receive a user data;
converting a locked state of the display device (100) to an unlocked state; and
displaying the user data by a second display panel of the display device (100).

2. The method of claim 1, wherein the card number signal comprises a usage time.

3. The method of claim 1 or 2, wherein the card number signal is generated by the electronic device based on a verification information.

4. The method of claim 3, wherein the verification information comprises a usage time.

5. The method of any one of the preceding claims, wherein the display system (1) comprises a cloud server (300), the cloud server (300) is communicatively connected with the electronic device (200) and the display device (100).

6. The method of claim 5, wherein the cloud server (300) generates the verification information based on a user information.

7. The method of claim 5 or 6, wherein the cloud server (300) generates the verification information and an information corresponding to the verification information through an encryption program based on the user information.

8. The method of claim 7, wherein the verification information is a public key and the information corresponding to the verification information is a private key.

9. The method of any one of the preceding claims 6-8, further comprising: executing, by the cloud server (300), an identity verification program to start an identity verification process based on the user information.

10. The method of claim 8, wherein the verification information is verified by the cloud server (300) to confirm whether the private key decrypts the public key to generate a verification result message.

11. The method of claim 10, wherein when the verification result message is successful, the display device (100) receives the user data provided by the cloud server (300).

12. A display device (100), comprising:
a memory module (120) configured to store an unlock program (121);
a near field communication module (130) configured to establish a near field communication connection and receive a card number signal;
a display panel (150); and
a processing module (160), electrically connected to the memory module (120), the near field communication module (130) and the display panel (150), wherein the processing module (160) is configured to execute the unlock program (121) to receive a user data, and the processing module (160) is configured to allow a locked state of the display device (100) to be changed to an unlocked state, the display panel (150) is configured to display the user data.

13. A display system, comprising:
an electronic device (200), comprising a first display panel; and
a display device (100), comprising a second display panel (150),
wherein the electronic device (200) is configured to execute an application program, the first display panel is configured to display a pattern, and the pattern represents a card number signal;
wherein the display device (100) is configured to establish a near field communication connection with the electronic device (200) according to the card number signal; and
wherein the display device (100) is configured to execute an unlock program (121) to receive a user data, the display device (100) is configured to changes from a locked state to an unlocked state, and the second display panel (150) of the display device (100) is configured to display the user data.
